# EUROPEAN PATENT APPLICATION

(11) **EP 4 429 184 A1**
(43) Date of publication of application: **11.09.2024**
(21) Application number: 23160983.5
(22) Date of filing: 09.03.2023
(51) Int. Cl.: H04L 41/14, H04L 41/16, G05B 13/00, G06N 20/00, G06N 3/08, H04L 41/0631, H04L 41/147

(54) **METHOD FOR AN EFFICIENT PERFORMANCE MONITORING OF A SYSTEM IN A HIERARCHICAL NETWORK OF DISTRIBUTED DEVICES**

(71) Applicant: ABB SCHWEIZ AG, 5400 Baden (CH)
(72) Inventor: SCHLAKE, Jan Christoph, 64293 Darmstadt (DE); AMARLINGAM, Madapu, 501102 Vikarabad (IN); PLATENIUS-MOHR, Marie Christin, 69493 Hirschberg an der Bergstraße (DE); SARKAR, Santonu, 560076 Bangalore (IN); BORRISON, Reuben, 68723 Schwetzingen (DE)
(74) Representative: Maiwald GmbH

(57) **Abstract**

The present invention relates to a method (100) for an efficient performance monitoring of a system (200) in a hierarchical network (70) of distributed edge devices (72, 74, 76) comprising at least one master edge (72), at least a first client edge (74), wherein the at least first client edge (74) is connected via a first communication interface (50) with the at least one master edge (72), at least a second client edge (76) connected via the first communication interface (51) to the at least one master edge (72), and wherein the at least one master edge (72) is connected to the system (200), comprising:
- receiving (102) sensor data (10) from the at least first client edge (74) sent by at least one sensor device (78) via a second communication interface (52);
- determining (104) a first local model parameter (14) representing a machine learning (ML) model (12) of the at least first client edge (74) based on the sensor data (10);
- storing (106) the first local model parameter (14) in a data storage (80) of the at least first client edge (74);
- collecting (108), by the at least one master edge (72), the first local model parameter (12) from the at least first client edge (74); and
- generating (110), by the at least one master edge (72) a global ML model (20) based on the at least first local model parameter (14), wherein the global ML model (20) is used for monitoring a system performance or a condition of the system (200).

## Description

### FIELD OF THE INVENTION

The present invention relates to a method for an efficient performance monitoring of a system in a hierarchical network of distributed devices.

### BACKGROUND OF THE INVENTION

In prior art, many systems exist to support the operation staff of a computer system used in a plant of the process industry, for example the operator, the maintenance engineer, the plant asset manager or the plant manager, to monitor and control the system performance, failure analysis and health of the system of the plant. In general, for example, the US 102 894 73 B2 describes a method for analysis of failures in a computer network.

But to achieve real autonomous systems in process industries, machine learning (ML) and artificial intelligence solutions are required to ensure save, operator-independent operation of a system or plant. But despite its potential, usage of machine learning in process industries as a valuable support to existing expert systems to reduce costs of operating and controlling a system in a plant is still not state of the art in process industries. Some of the reasons are that it requires an extra infrastructure including data scientists, data collection, cloud, ML learning framework etc. to generate, deploy, and maintain ML models. Further, ML models have a lifecycle and need to be retrained from time to time to stay relevant. In principle, ML models have the capability to be adopted to most situations and outperform human expert level performance. But to become practically relevant, the effort to generate, adapt, monitor, and re-train needs to be reduced drastically to be used for e.g. root caus analysis of a system.

There is a need to address these issues.

### SUMMARY OF THE INVENTION

Therefore, it would be advantageous to provide an improved concept for an efficient performance monitoring of a system in a hierarchical network of distributed devices.

The object of the present invention is solved by the subject matter of the independent claims, wherein further embodiments are incorporated in the dependent claims.

In a first aspect of the present invention, there is provided a method for an efficient performance monitoring of a system in a hierarchical network of distributed devices comprising at least one master edge, at least a first client edge, wherein the at least first client edge is connected via a first communication interface with the at least one master edge, at least a second client edge connected via the first communication interface to the at least one master edge, and wherein the at least one master edge is connected to the system, comprising the following steps:
- receiving sensor data from the at least first client edge sent by at least one sensor device via a second communication interface;
- determining a first local model parameter representing a machine learning (ML) model of the at least first client edge based on the sensor data;
- storing the first local model parameter in a data storage of the at least first client edge;
- collecting, by the at least one master edge, the first local model parameter from the at least first client edge; and
- generating, by the at least one master edge a global ML model based on the at least first local model parameter, wherein the global ML model is used for monitoring a system performance or a condition of the system.

In other words, a core idea behind the present invention is to aggregate local models of client edges to create a system model which can be used for example for root cause isolation of the operated system of a plant. For this, distributed online learning is used to move the learning part closer to the data generation.

In the following, some of the core aspects of the present invention are summarized.

The present invention takes advantages of the client (edge) device and master (edge) device hierarchy and the related topology of the network in which the system that is to be monitored is located. The system is part of the network.

It should be noted that the general term "edge" in the context of the present invention can have the meaning of a client edge or a master edge.

The edges and sensor devices form a network of leading (master) edges and follower (client) edges . At each follower edge local machine learning models are built for condition or performance monitoring. Therefore, machine learning methods like federated learning can be used which ensure that the models are always up to date which allows an efficient performance monitoring of the system. These models enhance the performance of potentially existing expert-based models.

The follower edge, meaning the client edge, has the following modules:
- Distributed Learning Module: Learning of ML models and prediction using these models.
- Performance / Condition Monitoring Modules: Use ML predictions and expert rules to inform user about condition / performs of the asset.
- Weight Sharing Module: Information about the learnt models is shared with other edges, especially the leading (master) edge.

The master edge uses the information from the local client devise, e.g. the weights of ML models, predictions of the ML models, expert rules, process data and the structure to:
- Aggregate / update all asset models of the same type,
- Build a global (system) ML model.

Therefore, the master edge has the following modules:
- Distributed Learning Module: Weight aggregation, learning of aggregated ML models and prediction using these models.
- System Learning Module: Model aggregation, learning of system ML models and prediction using these models.
- Failure Detection and Isolation Module: use predictions from all ML models related to one system to find root causes for system issues and/or evaluate impacts of asset issues.

By using local models in client edges and building a global system model in master edges according to the present invention and as explained before, the following advantagen can be achieved:
By using a resulting global system model as well as the knowledge about local model and the network or system structure, a more efficient performance monitoring of the system in terms of system condiction, failure analysis or alarming can be provided.

Information about the condition / performance of client edges and the system condition and performance can be used for performing a qualified root cause analysis.

According to the present invention, distributed learning can be used in an efficient manner for continuously updating condition monitoring and a root cause identification support, for example, in process industry plants.

Examples for industrial process plants can be:
- Mining: Conveyor Belt Systems, Processing Plants, Grinding Systems
- Chemical Industry: Refineries, Cracker
- Water Distribution: Pumping Stations
- Oil and Gas: Oil Riggs
- Ships: Propulsion, Motors
- Pulp and Paper: Paper Machine, Drying Section, Press Section

According to an example, the at least one master edge generates a global model parameter that is provided to the at least first client edge and / or to the at least second client edge to update each of their local ML models. In this way, the advantage of a fast and efficient update of ML models within the network is provided improving the performance monitoring of the system. This approach is applied for so-called fleet monitoring models with similar local assets and local models which is the case, when the first and second client devices are of the same type, e.g. both are motors or both are pumps.

According to an example, the global ML model is built by aggregating the first local model parameter with a second local model parameter of a ML model provided by the at least second client edge. In this way, the advantage is achieved that global system model can be provided in an efficient manner taking into account changes in the topology of the network. The local ML models can be of different type for each asset.

According to an example, the first local model parameter corresponds to a first machine learning (ML) weight value, the second local model parameter corresponds to a second machine learning weight value and the global model parameter corresponds to a third machine learning weight value of the corresponding ML models. In this way, the advantage of an efficient exchange of the properties the ML models can be achieved.

According to an example, the at least one master edge, the at least first client edge and the at least second client edge distribute their model parameters with each other. In this way, the advantage of an efficient exchange of the properties the ML models can be achieved.

According to an example, the global ML model is updated each time a change of the local model parameter has occurred. In this way, the advantage is achieved that a changed topology of the network an be effiently communicated to all participating devices in the network.

According to an example, the step of collecting is performed in at least one of the following manners: an event-based approach, a time-based approach. In this way, the advantage is achieved that the performance monitoring of the system can be efficiently adapted to changing requirements.

According to an example, the step of generating the resulting global ML model, by the at least one master edge, uses an information about a topology of the network to build the global ML model. In this way, the advantage is achieved that the performance monitoring of the system can be improved by adapting the monitor of the system to a real-time status information of the topology of the network.

In a second aspect of the present invention, a global machine-learning model according the first aspect is used for monitoring a system for at least one of the following: condition monitoring of the system and / or failure or route cause analysis of the system.

It should be mentioned that for an aspect of fleet asset monitoring, the use of the global model refers to condition monitoring of the single assets while in the system monitoring case this refers to the condition monitoring of a system consisting of various assets.

In a third aspect of the present invention, a computer is provided comprising a processor configured to perform the method of the preceding aspect and / or to perform the use of a global machine-learning model.

In a fourth aspect of the present invention, there is provided a computer program product comprising instructions which, when the program is executed by a processor of a computer, causes the computer to perform the method of any of the first and second aspects and / or to use the global machine-learning model according to the preceding aspect.

In a fifth aspect of the present invention, a machine-readable data medium and / or download product containing the computer program of the fourth aspect.

### BRIEF DESCRIPTION OF THE DRAWINGS

Exemplary embodiments will be described in the following with reference to the following drawings:
Fig. 1 illustrates a schematic flow-diagram of a method of the present invention; and
Fig. 2 illustrates a schematic example of a data processing between client edges, a master dervice and a system in a hierarchical network of distributed devices according to an embodiment of the present invention.

### DETAILED DESCRIPTION OF THE DRAWINGS

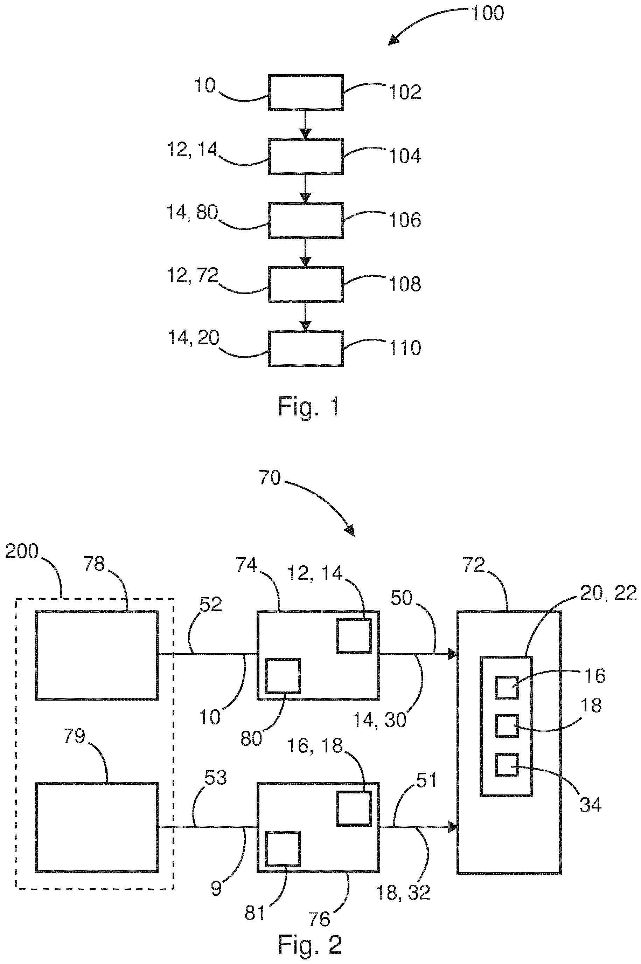

Fig. 1 illustrates a schematic flow-diagram of a method 100 for an efficient performance monitoring of a system 200 in a hierarchical network 70 of distributed devices 72, 74, 76 comprising at least one master edge 72, at least a first client edge 74, wherein the at least first client edge 74 is connected via a first communication interface 50 with the at least one master edge 72, at least a second client edge 76 connected via the first communication interface 51 to the at least one master edge 72, and wherein the at least one master edge 72 is connected to the system 200.

In a first step 102, sensor data 10 is received from the at least first client edge 74 sent by at least one sensor device 78 via a second communication interface 52.

In a second step 104, a first local model parameter 14 is determined representing a machine learning (ML) model 12 of the at least first client edge 74 based on the sensor data 10.

In a third step 106, the first local model parameter 14 is stored in a data storage 80 of the at least first client edge 74.

In a fourth step 108, the at least one master edge 72 collects the first local model parameter 14 from the at least first client edge 74.

Optionally, the step of collecting 108 is performed in at least one of the following manners: an event-based approach, a time-based approach. A event-based approach can be described as a detected changed configuration of the distributed network 70 of the system 200. Collecting model paremeters in the sense of the present invention can mean that the master edge 72 actively enquires the local model parameters from the respective client edges 74, 76 or the client edges 74, 76 send each of their model parameter or weight values in a defined manner, e.g. time-based, even-based, to the master edge 72.

In a fifth step 110, the at least one master edge 72 generates a global ML model 20 based on the at least first local model parameter 14, wherein the global ML model 20 is used for montoring a system performance or a condition of the system 200.

Optionally, the step of generating 110 the resulting global ML model (20), by the at least one master edge 72, uses an information about a topology of the network 70 to build the global ML model 20. The topology information may be an information about how the distributed devices in the network are linked together, incorporating information for example a heuristic parameter such as a distance between the devices.

Also, the steps 102 to 110 describe the method of the present invention for the at least first client edge 74, it should be made clear herein, that also the same method steps can be applied to the at least second client edge 76 as well.

Fig. 2 illustrates a schematic example of a data processing between client edges 74, 76, a master dervice 72 and a system 200 in a hierarchical network 70 of distributed devices according to an embodiment of the present invention.

The system 200 may be a section of a plant. The client edges 74, 76 are connected to sensor devices 78, 79 which may be different types of devices such as motors, pumps etc.

The hierarchical network 70 according to Fig. 2 comprises a plurality of client edge 74, 76, one master edge 72 and a system 200 that is monitored.

The sensor device 78 is connected to the first client edge 74 via a second communication interface 52 to exchange sensor data 10. The first client edge 74 is connectet to the master edge 72 via a first communication interface 50. The first client edge 74 comprises a first machine learning model 12 represented by a first local model parameter 14. The first machine learning model 12 is generated based on the sensor data 10. The data storage 80 of the first client edge 74 contains the first local model parameter 14. Further, the first local model parameter 14 corresponds to a first machine learning (ML) weight value 30.

The sensor device 79 is connected to the second client edge 76 via a second communication interface 53 to exchange sensor data 9. The second client edge 76 is connectet to the master edge 72 via a first communication interface 51. The second client edge 76 comprises a second machine learning model 16 represented by a second local model parameter 18. The second machine learning model 16 is generated based on the sensor data 9. The data storage 81 of the second client edge 76 contains the second local model parameter 18. Further, the second local model parameter 18 corresponds to a second machine learning (ML) weight value 32.

In this respect it should be noted that a sensor device ("asset") can be every machine, device etc. which is used in a process plant to run the process. Usually, these assets generate data where some of it is forwarded to the systemr or distributed control system DCS. In addition to this, more and more assets generate condition monitoring information which is not used in the system. In a hierarchical edge network, all data can be routed via an edge device (master edge or client edge).

### Examples:

- Assets: Motors, Valves, Pumps
- Data: Voltages, Ampere, Speed
- Condition Monitoring Information: Fault Information, Asset Health

Process data is also collected from sensor devices. This data is usually used in the DCS by operators to monitor and optimize the process, for example, process data like a tank level or a concentration of a fluid.

In respect of the client edges 74, 76 ("follower edge"), the following additional and detailed aspects should be mentioned for a better understanding of the function of the client edges in the context of the present invention:

At the follower edges or client edges there might be existing expert rules which fuel a Condition Monitoring Module. The Condition Monitoring module provides information about the asset health. This information is used by maintenance engineers to plan maintenance actions of the system.

### Examples:

- Expert Rules: Threshold-based rules which are adapted to local systems
- Results: Alerts, Traffic Lights at Dashbaords, Percentage Trends

At the follower edges there also might be a performance monitoring module which uses expert rules.

### Examples:

- Expert Rules: Loop Performance
- Results: Alarms, Trends in Operator Screens, KPIs at Dashboard, Percentage Trends

In addition to the expert rules, the performance monitoring module and the condition monitoring module can also be fueled by the distributed learning module. This module has two components: the continuous improvement module and the prediction module. The continuous improvement module uses a federated learning / online learning / transfer learning schema to always update models using local data. Here, it is important to mention that these local models allow to improve models continuously using local data in the continuous improvement module while the prediction module always uses the latest module to make predictions which are used in the performance/condition monitoring module. If the structure of the ML model is fixed, the weights of this model characterizes the local ML model of a client edge.

These weights can be shared with other client or master edges using the weight sharing module. The weight sharing module also takes care of storing the latest weights in the data storage. Updates on the weights can also come from the master edge, e.g. by using federated learning.

It should be further noted that the embodiment of Fig. 2 can be applied to two different approaches:
One approach is fleet monitoring and the second approach is system monitoring. The method of the present invention can be applied to both approaches, but the global model 20 is used in a different way in each of the two approaches:
In fleet monitoring, the sensor devices 78, 79 are of the same type, e.g. both are motors or pumps. The global model 20 generates the global model parameter 22 that is provided to the first client edge 74 and / or to the second client edge 76 to update each of their local ML models 12, 16.
In system monitoring, the the sensor devices 78, 79 are of a different type, e.g. one is motor and the other one is a pump.

Refering again to Fig. 2 of the present invention, the master edge or leading edge 72 generates a global ML model 20.

The global ML model 20 is used for monitoring a system performance or a condition of the system 200. The resulting global ML model 20 may also be used for condition monitoring and / or a failure analysis of the devices as part of the hierarchical network 70. However, each of the client edges 74, 76 may contribute to condition monitoring and failure analysis by providing information to the master edge 72.

The resulting global ML model 20 is based on the first local model parameter 14 and (optionally) on the second local model parameter 18. Alternatively, the weight values 30, 32 are transmitted from each of the client edges 74, 76 to the master edge 72.

Further, the global ML model 20 is built by aggregating the first local model parameter 14 with a second local model parameter 18 of the second local ML model 16 provided by the at least second client edge 76. For this, different types of local models can be used.

The global ML model 20 comprises a global model parameter 22 that corresponds to a third machine learning weight value 34.

In principle, two application cases for the embodiment for Fig. 2 have to distinguished:
In case, the sensor devices 78, 79 are identical devices or so-called fleet devices, e.g. each of them is pump or motor, the global model 20 generates the global model parameter 22 that is provided to the first client edge 74 and / or to the second client edge 76 to update each of their local ML models 12, 16.
In case, the sensor devices 78, 79 are different devices and named as system devices of the system 200, e.g. the sensor device 78 is a pump and the sensor device 79 is a motor, wherein both sensor devices 78, 79 are part of the system 200, then the global model 20 generates a prediction value that is shared for root cause analysis. However, the aggregation to build a global model 20 from each of the local model parameter 14, 18 is done differently compared to the fleet monitoring approach. In this approach, the global model parameter 22 is not provided to o the first client edge 74 and / or to the second client edge 76 to update each of their local ML models 12, 16.

The master edge 72, the first client edge 74 and the second client edge 76 are able to distribute their model parameters 14, 18, 22 with each other, if required.

The global ML model 20 can be updated each time a change of the local model parameter 14, 18 has occurred.

The master edge 72 communicates with the system 200 to monitor the system 200 by using the resulting global model 20. By using the local ML models 12, 16 and the global ML model 20 in the way as described before, the performance of the system 200 can be monitored in an efficient manner taking into account real-time changes in the topology of the network 70 which are depicted in a change of the corresponding ML models 12, 16, 20 of the devices 72, 74, 76.

In respect of the master edge, the following additional and detailed aspects should be mentioned for a better understanding of the function of the master edge in the context of the present invention:
The leading edge or master edge 72 can have the same functionalities as the client edges. In addition to this, it can have a weight aggregation module. Here, all weights from the follower edges (client edges) which belong to the same type of models (same purpose, same structure, same model type) are aggregated to a new global weight value which is send to all follower edges to update their local weights.
The master edge also has a system monitoring module. This module uses the information about the system configuration from the topology module to build ML models for the system 200. The ML models (represented by the weights ) or the expert rules of each asset forming the system can be reused here as features/inputs for the ML process. The global system ML model 20 gets updated each time the local weights 30, 32 of the local models of the client edges change. The ML process learns a global model 20 for system performance and condition monitoring.

In a first aspect, the system monitoring aspect in regard of system 200 as shown in Fig. 2 is addressed in the following: The system monitoring module builds "global" models 20 based on different asset models 12, 16, e.g. one model from a motor of sensor device 78, another one model from a pump of sensor device 79.

In a second aspect, the distributed asset monitoring module builds "globalized" models 20 based on various asset models of the same type by weight aggregation when using fleet devices for asset fleet monitoring meaning that for example the sensor device 78, 79 are each motors or pumps and are of the same type.

Both - the first and the second aspect - use the same global model or local level models, but for different purposes; both exploid the hierarchical edge network infrastructure, but via a different model aggregation.

Which models belong to the same type of model is stored in the topology module in a machine-readable format, e.g. as a json file. In the topology module it is also stored which assets belong to the same system in a machine-readable format, e.g. as a json file.

### Example:

- All motor condition monitoring systems for motors of a specific type use the same machine learning model structure and method. Hence, the weights can be shared.
- A Conveyor Belt Systems consists of three motors of the same type, three drives, a belt, a controller, a control algorithm.

Besides the system data, the global system ML model training takes also local ML weights 30, 32 and predictions into account (same with expert models). The resulting system model 20 can be used for system condition / performance monitoring or alarming. Information about the asset condition / performance and the system condition / performance can be used for root cause analysis.

### Examples for an Asset Condition Monitoring:

- The ML model for asset 1 condition predicts a condition degradation
- The ML model for the system does not predict a condition degradation
- As a result, the maintenance engineer does not have to prioritize the issue immediately since the impact on the system is limited

### Example System Condition Monitoring:

- The ML model for the system predicts a condition degradation
- The ML model for asset 1 condition predicts a condition degradation
- The ML models for all other asset conditions do not predict a condition degradation
- As a result, the maintenance engineer has indication that the system condition is highly affected by asset 1 and hence schedules immediate actions.

Further, in the following, further aspects are described that provide a general and detailed view on the present invention in the context of the embodiment of Fig. 2:
By using distributed Learning Modules, especially a federated learning method the client edges 74, 76 are continuously collecting new data and learning a condition monitoring model for assets, e.g. motors, pumps.
Further, by using existing expert rule Modules in the client edges 74, 76 existing expert rules are based on experience (e.g. for creation thresholds) which can be used to extract features which can be used in local ML models of the client edges 74, 76 as well.

In a further aspect, weights of the local models 12, 16 are shared with similar assets or devices 74, 76 and are then send to higher level edge 72 for aggregation to enable system monitoring, e.g. plant or module. For this, existing expert rules for condition monitoring of the system 200 can be incorporated as well.

In a further aspect, the local ML models are continuously updated at the client edge 74, 76. In a further way, the global system model 20 that aggregates local models on system level model may only use weights of local models. Further the global model 20 is updated continuously when new weights become available.

### Reference signs

- 9, 10: Sensor data
- 12: First Machine-learning (ML) model
- 14: First local model parameter
- 16: Second Machine-learning (ML) model
- 18: Second local model parameter
- 20: Global machine-learning (ML) model
- 22: Global model parameter
- 30: First weight value of the first ML model
- 32: Second weight value of the second ML model
- 34: Third weight value of the global ML model
- 50: First communication interface
- 52: Second communication interface
- 70: Network
- 72: Master edge
- 74: First client edge
- 76: Second client edge
- 78, 79: Sensor device
- 80, 81: Data storage

- 100: Method
- 102: Receiving
- 104: Determining
- 106: Storing
- 108: Collecting
- 110: Generating

- 200: System

## Claims

1. Method (100) for an efficient performance monitoring of a system (200) in a hierarchical network (70) of distributed edges (72, 74, 76) comprising at least one master edge (72), at least a first client edge (74), wherein the at least first client edge (74) is connected via a first communication interface (50) with the at least one master edge (72), at least a second client edge (76) connected via the first communication interface (51) to the at least one master edge (72), and wherein the at least one master edge (72) is connected to the system (200), comprising:
- receiving (102) sensor data (10) from the at least first client edge (74) sent by at least one sensor device (78) via a second communication interface (52);
- determining (104) a first local model parameter (14) representing a machine learning (ML) model (12) of the at least first client edge (74) based on the sensor data (10);
- storing (106) the first local model parameter (14) in a data storage (80) of the at least first client edge (74);
- collecting (108), by the at least one master edge (72), the first local model parameter (14) from the at least first client edge (74); and
- generating (110), by the at least one master edge (72) a global ML model (20) based on the at least first local model parameter (14), wherein the global ML model (20) is used for monitoring a system performance or a condition of the system (200).

2. Method (100) according to claim 1, wherein the at least one master edge (72) generates a global model parameter (22) that is provided to the at least first client edge (74) and / or to the at least second client edge (76) to update each of their local ML models (12, 16).

3. Method (100) according to any of the preceding claims, wherein the global ML model (20) is built by aggregating the first local model parameter (14) with a second local model parameter (18) of a ML model (16) provided by the at least second client edge (76).

4. Method (100) according to any of the preceding claims, wherein the first local model parameter (14) corresponds to a first machine learning (ML) weight value (30), the second local model parameter (18) corresponds to a second machine learning weight value (32) and the global model parameter (22) corresponds to a third machine learning weight value (34) of the corresponding ML models (12, 16, 20).

5. Method (100) according to any of the preceding claims, wherein the at least one master edge (72), the at least first client edge (74) and the at least second client edge (76) distribute their model parameters (14, 18, 22) with each other.

6. Method (100) according to any of the preceding claims, wherein the global ML model (20) is updated each time a change of the local model parameter (14, 18) has occurred.

7. Method (100) according to any of the preceding claims, wherein the step of collecting (108) is performed in at least one of the following manners: an event-based approach, a time-based approach .

8. Method (100) according to any of the preceding claims, wherein the step of generating (110) the resulting global ML model (20), by the at least one master edge (72), uses an information about a topology of the network (70) to build the global ML model (20).

9. Use of a global machine-learning model (20) according any one of the preceding claims for monitoring a system (200) for at least one of the following: condition monitoring and / or failure or rout cause analysis of the system (200).

10. A computer comprising a processor configured to perform the method of any preceding claims 1 to 8 to monitor a system (200) and / or to perform the use of a global machine-learning model according to claim 9.

11. A computer program product comprising instructions which, when the computer program is executed by a processor of a computer, causes the computer to perform the method of any of claims 1 to 8 and / or to use the global machine-learning model according to claim 9.

12. Machine-readable data medium and / or download product containing the computer program according to claim 11.
